# EUROPÄISCHE PATENTANMELDUNG

(11) **EP 2 549 059 A1**
(43) Veröffentlichungstag der Anmeldung: **23.01.2013**
(21) Anmeldenummer: 11174791.1
(22) Anmeldetag: 21.07.2011
(51) Int. Cl.: F01D 3/04, F01D 25/16, F16C 32/06

(54) **Verfahren zum Betrieb einer Rotationsmaschine**

(71) Anmelder: SIEMENS AKTIENGESELLSCHAFT, 80333 München (DE)
(72) Erfinder: Janssen, Stefan, 45147 Essen (DE); Kursch, Michael, 45479 Mülheim an der Ruhr (DE)

(57) **Zusammenfassung**

Die Erfindung betrifft ein Verfahren zum Betrieb einer Rotationsmaschine mit einem in einem Lager (39) gelagerten Rotor (14), welcher Rotor (14) im Betriebszeitpunkt einer hauptsächlich in nur einer Axialrichtung wirkenden Schubkraft ausgesetzt ist und welche Schubkraft von einem ersten Spurlager (43) des Lagers (39) über Gleitmittel aufgenommen und abgeleitet wird, wobei das Lager (39) ein zweites Spurlager (45) aufweist. Um Verfahren anzugeben, bei welchem die Axialschwingungen des Rotors (14) gedämpft oder gar vermieden werden, wird vorgeschlagen, dass während dem Auftreten der Schubkraft zumindest zeitweise gleichzeitig das zweite Spurlager (45) eine in Schubrichtung wirkende Kraft auf das erste Spurlager (43) erzeugt wird.

## Beschreibung

Die Erfindung betrifft ein Verfahren zum Betrieb einer Rotationsmaschine gemäß dem Oberbegriff des Anspruchs 1.

Eine gattungsgemäße Rotationsmaschine ist beispielsweise in der WO 00/28190 A1 beschrieben. Gemäß dieser Veröffentlichung ist die Rotationsmaschine eine Gasturbine axialer Bauart, mit den üblicherweise vorhandenen Komponenten Verdichter, Brennkammer, Turbine sowie einem gemeinschaftlichen Rotor für Verdichter und Turbine. Die bekannte Gasturbine umfasst ein verdichterseitiges Axiallager mit einer Hauptspur und einer Nebenspur zur axialen Positionierung des Gasturbinenrotors. Hauptspur und Nebenspur können dabei an einer Seitenfläche eines jeweiligen Wellenbunds unter Ausbildung eines hydrodynamischen Gleitfilms aus Hydrauliköl anliegen. Welche der beiden Spuren die axiale Lage des Rotors vorgibt, ist dabei betriebsabhängig.

Im bestimmungsgemäßen Betrieb der Gasturbine liegt die Seitenfläche des ersten Wellenbunds an der Hauptspur des Axiallagers an, da die im Turbinenbereich auf den Rotor axial einwirkenden Strömungskräfte des Heißgases größer sind als die Strömungskräfte im Verdichter und somit diesen stetig vom Verdichter in Richtung Turbineneinheit schieben. Die Nebenspur ist anstelle der Hauptspur dann im Kraftfluss des Axiallagers, wenn der Rotor der Gasturbine vom Stillstand auf Nenndrehzahl beschleunigt wird. Während dieses Hochfahrens tritt eine auf den Gasturbinenrotor axial wirkende resultierende Schubkraft auf, die entgegengesetzt zur Betriebs-Schubkraft gerichtet ist, nämlich von der Turbineneinheit in Richtung Verdichter. Etwas vor Erreichen der Nenndrehzahl ändert sich die aktuelle Schubrichtung schlagartig, so dass dann die Axialpositionierung des Rotors von der Nebenspur auf die Hauptspur wechselt.

Das vorbekannte Axiallager ist zudem mit axial verschieblichen Lagerelementen ausgestattet, um den Rotor während des stationären Betriebs der Gasturbine entgegen der Strömungsrichtung des Heißgases zu verschieben und damit Radialspalte in der Turbine zwischen Laufschaufelspitzen und einer diesen gegenüberliegenden Gehäusewand zu minimieren.

Es hat sich gezeigt, dass Betriebszustände beim Betrieb der Gasturbine auftreten können, die zu Axialschwingungen des Rotors führen. Diese Axialschwingungen können schlechtestenfalls zur Schädigung des Axiallagers oder von im Kraftfluss befindlichen Bauteilen führen, sofern die Amplituden der Axialschwingungen eine kritische Größe überschreiten. Die Axialschwingungen werden zumeist durch einen innerhalb der Brennkammer ablaufenden instabilen Verbrennungsprozess hervorgerufen. Die Ursachen der Instabilität sind häufig vielfältig und nicht kausal vorhersagbar.

Aufgabe der Erfindung ist daher die Bereitstellung eines Verfahrens zum Betrieb einer Rotationsmaschine, bei welchem die Axialschwingungen des Rotors gedämpft oder gar vermieden werden.

Die auf das Verfahren gerichtete Aufgabe wird mit einem solchen gemäß den Merkmalen des Anspruchs 1 gelöst. Vorteilhafte Ausgestaltungen und weitere Merkmale der Erfindung sind in den Unteransprüchen angegeben.

Beim erfindungsgemäßen Verfahren zum Betrieb einer Rotationsmaschine mit einem in einem Lager gelagerten Rotor, welcher Rotor zu einem Betriebszeitpunkt einer hauptsächlich in nur einer Axialrichtung - d.h. Hauptschubrichtung - wirkenden Schubkraft ausgesetzt ist und welche Schubkraft von einem ersten Spurlager des Lagers über Gleitmittel aufgenommen und abgeleitet wird, wobei das Lager ein zweites Spurlager aufweist, wird während dem Auftreten der Schubkraft zumindest zeitweise gleichzeitig das zweite Spurlager so angesteuert, dass es über den Rotor eine in Hauptschubrichtung wirkende Kraft auf das erste Spurlager erzeugt.

Die Erfinder haben erkannt, dass mit Hilfe der jeweils unbelasteten Spur - also dem zweiten Spurlager - die Möglichkeit besteht, beim Auftreten von Axialschwingungen auch das zweite Spurlager in Eingriff mit dem Rotor zu bringen und dadurch eine Dämpfung der Axialschwingungen über die Reduktion des Axialspiels an der belasteten - also dem ersten Spurlager - zu erreichen. Insofern wird der Rotor der Rotationsmaschine trotz Vorhandensein einer zum Zeitpunkt in nur einer Axialrichtung wirkenden Schubkraft zusätzlich mit einer weiteren, in der gleichen Richtung wirkenden Kraft beaufschlagt, um die Neigung des Rotors zum Schwingen zu verringern. Obwohl dadurch das erste Spurlager mit einer höheren Kraft beaufschlagt wird als durch die Schubkraft erzeugt, wird es üblicherweise dadurch nicht überlastet. Mit dem Verfahren kann sichergestellt werden, dass zwar nicht die Ursache der Axialschwingungen des Rotors, jedoch deren Eigenschaften signifikant verändert werden: die Amplitude der Axialschwingungen wird begrenzt. Dies vermeidet zuverlässig Schädigungen des Lagers oder von im Kraftfluss befindlichen Bauteilen.

Vorzugsweise ist das Lager und somit die beiden Spurlager jeweils als hydrodynamisches Gleitlager ausgestaltet, bei dem die kraftschlüssige Kopplung von Spurlager und Rotor durch das Einspeisen eines Hydrauliköls in den zwischen Spurlager und Rotor vorhandenen Axialspalt erreicht wird.

Besonders bevorzugt wird das Verfahren während eines instationären Betriebszustands und/oder während eines Teillastbetriebs einer als Turbomaschine ausgestalteten Rotationsmaschine durchgeführt. Insbesondere bei stationären Gasturbinen, bei denen üblicherweise eine in Axialrichtung wirkende Schubkraft auf den Rotor auftritt, können bei instationären Betriebszuständen, wie z.B. dem Anfahren der Gasturbine aus dem Stillstand bis auf Nenndrehzahl, Axialschwingungen auftreten. Auch bei niedriger Teillast können derartige Schwingungszustände auftreten. Insofern ist es von Vorteil, wenn lediglich während dieser Betriebszustände auch das zweite Spurlager kraftschlüssig mit dem Rotor verbunden ist. Üblicherweise ist im Volllastbetrieb das zweite Spurlager nicht kraftschlüssig an den Rotor gekoppelt, sondern lediglich nur das erste Spurlager, da in diesem Betriebszustand Axialschwingungen in der Regel nicht auftreten. Das spart die zur Versorgung des zweiten Spurlagers mit Hydraulikmittel benötigte Energie.

Selbstverständlich ist das Verfahren auch durchführbar vor, während und/oder nach einer Axialverschiebung des Rotors.

Weitere Vorteile und Merkmale der Erfindung ergeben sich aus einem Ausführungsbeispiel, welches in den angehangenen Figuren näher beschrieben ist. Es zeigen:
- FIG 1: eine stationäre Gasturbine in einem Längsteilquerschnitt und
- FIG 2: einen Längsschnitt durch ein Lager einer Rotationsmaschine mit einem ersten und einem zweiten Spurlager.

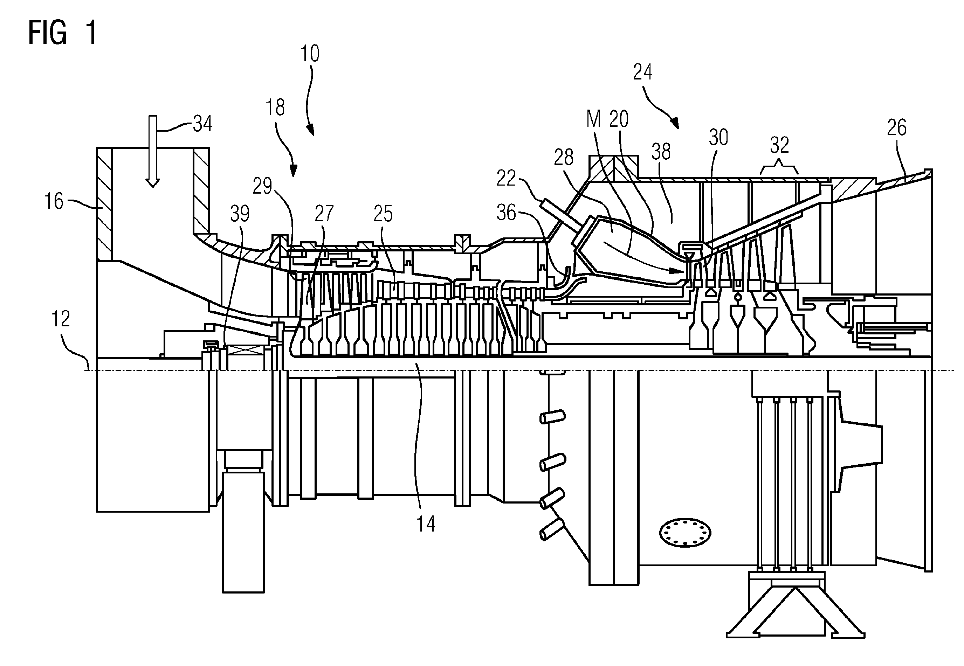

Figur 1 zeigt eine stationäre Gasturbine 10 in einem Längsteilschnitt. Die Gasturbine 10 weist im Innern einen um eine Rotationsachse 12 drehgelagerten Rotor 14 auf, der auch als Turbinenläufer bezeichnet wird. Entlang des Rotors 14 folgen aufeinander ein Ansauggehäuse 16, ein Verdichter 18, eine torusartige Ringbrennkammer 20 mit mehreren rotationssymmetrisch zueinander angeordneten Brennern 22, eine Turbineneinheit 24 und ein Abgasgehäuse 26.

Der Verdichter 18 umfasst einen ringförmig ausgebildeten Verdichterkanal 25 mit darin kaskadisch aufeinanderfolgenden Verdichterstufen aus Laufschaufel- und Leitschaufelkränzen. Die am Rotor 14 angeordneten Laufschaufeln 27 liegen mit ihren frei endenden Schaufelblattspitzen 29 einer äußeren Kanalwand des Verdichterkanals 25 gegenüber. Der Verdichterkanal 25 mündet über einen Verdichterausgangsdiffusor 36 in einem Plenum 38. Darin ist die Ringbrennkammer 20 mit ihrem Verbrennungsraum 28 vorgesehen, der mit einem ringförmigen Heißgaskanal 30 der Turbineneinheit 24 kommuniziert. In der Turbineneinheit 24 sind vier hintereinander geschaltete Turbinenstufen 32 angeordnet. Am Rotor 14 ist ein Generator oder eine Arbeitsmaschine (jeweils nicht dargestellt) angekoppelt.

Im Betrieb der Gasturbine 10 saugt der Verdichter 18 durch das Ansauggehäuse 16 als zu verdichtendes Medium Umgebungsluft 34 an und verdichtet diese. Die verdichtete Luft wird durch den Verdichterausgangsdiffusor 36 in das Plenum 38 geführt, von wo aus es in die Brenner 22 einströmt. Über die Brenner 22 gelangt auch Brennstoff in den Verbrennungsraum 28. Dort wird der Brennstoff unter Zugabe der verdichteten Luft zu einem Heißgas M verbrannt. Das Heißgas M strömt anschließend in den Heißgaskanal 30, wo es sich arbeitsleistend an den Turbinenschaufeln der Turbineneinheit 24 entspannt. Die währenddessen freigesetzte Energie wird vom Rotor 14 aufgenommen und einerseits zum Antrieb des Verdichters 18 und andererseits zum Antrieb einer Arbeitsmaschine oder elektrischen Generators genutzt.

Ein verdichterseitiges Lager 39 zur Lagerung des Rotors 14 ist in Figur 1 lediglich schematisch dargestellt.

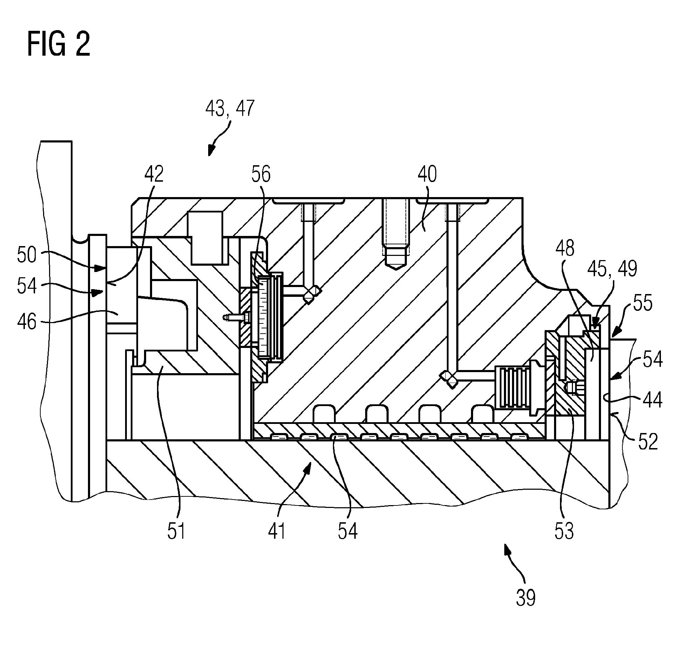

In FIG 2 ist das Lager 39 in einem Längsschnitt im Detail dargestellt. Das Lager 39 umfasst einen zentralen Lagerkörper 40, in dem zwei Axiallager 47, 49 und ein Radiallager 41 vorgesehen sind. Die Axiallager 47, 49 sind dabei als Hauptspurlager und als Nebenspurlager ausgebildet. Die beiden Axiallager 47, 49 werden nachfolgend kurz als Hauptspur 47 bzw. Nebenspur 49 oder gemeinsam als Spuren 47, 49 bezeichnet. Alle Lager 41, 47, 49 sind als hydrodynamische Gleitlager ausgebildet.

Die Hauptspur 47 umfasst einen Elementträger 51 und mehrere darin sitzende, über den Umfang verteilte Lagerelemente 46, welche jeweils eine Lagerfläche 50 besitzen. Die Lagerflächen 50 der Lagerelemente 46 sind der seitlichen Rotorfläche 42 unmittelbar benachbart. Ebenso umfasst die Nebenspur 49 einen Elementträger 53 mit mehreren, über den Umfang verteilten Lagerelementen 48, die jeweils eine der seitlichen Rotorfläche 44 gegenüberliegende Lagerfläche 52 besitzen. Die Lagerelemente 46, 48 können dabei durch auf die Elementträger 51, 53 einwirkendes Hydraulikmittel an die Rotorflächen 42, 44 zur Axiallagerung des Rotors 14 angepresst werden.

Beim Hochfahren der Gasturbine 10 wird der Gasturbinenrotor 14 von 0 min⁻¹ bis auf Nenndrehzahl beschleunigt. Währenddessen und auch im Betrieb der Gasturbine 10 treten sowohl im Verdichter 18 als auch in der Turbineneinheit 24 Strömungskräfte auf, die auf den Rotor 14 einwirken. Deren axialen Komponenten sind einander gegengerichtet und kompensieren sich teilweise. Beim Hochfahren schiebt die resultierende axiale Strömungskraft den Rotor 14 anfänglich in Richtung des Ansauggehäuses 16. Erst mit dem Erreichen einer Umschlag-Drehzahl, die etwas unterhalb der Nenndrehzahl liegt, dreht sich die resultierende axiale Schubkraft schlagartig um, so dass der Rotor 14 dann in Richtung Abgasgehäuse 26 schiebt. Auch im bestimmungsgemäßen Betrieb der Gasturbine wird der Rotor 14 von den Strömungskräften des Heißgases M in diese Richtung geschoben. Diese Richtung wird als Hauptschubrichtung bezeichnet.

Während des Hochfahrens und auch im Betrieb der Gasturbine 10 liegt ein Film aus Hydraulikmittel 54 zwischen dem Rotor 14 und dem Radiallager 41 an.

Solange der Rotor 14 entgegen der Hauptschubrichtung schiebt, sind zu dessen Axiallagerung die beiden Flächen 44, 52 lediglich durch einen dünnen Film aus einem Hydraulikmittel, beispielsweise Hydrauliköl oder Turbinenöl, getrennt. Der Rotor 14 und die Nebenspur 49 sind dann kraftschlüssig verbunden, wohingegen zwischen der Lagerfläche 50 und der Rotorfläche 42 ein Luftspalt (nicht in FIG 2 dargestellt) vorhanden ist. Dies bedeutet, dass eine kraftschlüssige Kopplung der Hauptspur 47 mit dem Rotor 14 dann nicht gegeben ist.

Nach dem Erreichen der Umschlag-Drehzahl wechselt die Axiallagerung von der Nebenspur 49 auf die Hauptspur 47. Dazu bildet sich zwischen Lagerfläche 50 und Rotorfläche 42 ein hydrodynamisch wirkender Film aus dem Hydraulikmittel aus. Gleichzeitig wird die Nebenspur 49 unbelastet, indem ein Luftspalt 55 zwischen Lagerfläche 52 und Rotorfläche 44 auftritt (dargestellt in FIG 2).

Das Lagerelement 46 ist zur Einstellung von Radialspalten axial verschieblich, wobei zur Axialverschiebung in dem Lager 39 ein Ölraum 56 angeordnet ist, in den Hydrauliköl unter einem hohen Druck einspeisbar ist, so dass eine synchrone axiale Verschiebung von Elementträger 51 und Lagerelementen 46 erreicht wird. Der Elementträger 51 weist zum Ölraum 56 hin an einem Innendurchmesser und einem Außendurchmesser jeweils einen Dichtring auf. Auch das Lagerelement 48 und der mit ihm zusammenwirkende Elementträger 53 sind ebenso axialverschieblich ausgebildet.

Für den Fall, dass der Rotor 14 aufgrund von Verbrennungsinstabilitäten im Teillastbetrieb der Gasturbine 10 zu Axialschwingungen neigt, kann zusätzlich zu der im Kraftfluss befindlichen (belasteten) Hauptspur 47 als erstes Spurlager 43 die Nebenspur 49 als zweites Spurlager 45 durch gleichzeitiges Zuführen des Hydraulikmittels in den Spalt zwischen Lagerfläche 52 und Rotorfläche 44 kraftschlüssig gekoppelt werden mit dem Ziel, das Axialspiel des Rotors 14 zu verringern. Dazu ist ein derartig großer Druck im Hydraulikmittel des zweiten Spurlagers 45 erforderlich, dass eine zusätzlich in Hauptschubrichtung des Rotors 14 wirkende Kraft vom zweiten Spurlager 45 über den Rotor 14 auf das erste Spurlager 43 erzeugt wird. Diese Kraft dämpft und begrenzt beim Auftreten von Axialschwingungen das Zurückpendeln des Rotors 14 entgegen der Strömungsrichtung des Heißgases M. Dadurch können Schädigungen sowohl am Rotor 14 als auch an den im Kraftschluss befindlichen Lagerbauteilen der Gasturbine 10 sicher vermieden werden.

Sofern während des Hochfahrens Axialschwingungen auftreten, können diese gedämpft werden, indem zu der bereits belasteten Nebenspur 49 die Hauptspur 47 zugeschaltet wird. Die Hauptspur 47 erzeugt dann eine zusätzliche Kraft, welche über den Rotor 14 die Nebenspur 49 weiter belastet.

Selbstverständlich ist das Verfahren nicht nur bei Gasturbinen anwendbar, sondern auch bei anderen Rotationsmaschinen.

Insgesamt betrifft die Erfindung somit ein Verfahren zum Betrieb einer Rotationsmaschine mit einem in einem Lager 39 gelagerten Rotor 14, welcher Rotor 14 zu einem Betriebszeitpunkt einer hauptsächlich in nur einer Axialrichtung wirkenden Schubkraft ausgesetzt ist und welche Schubkraft von einem ersten Spurlager 43 des Lagers 39 über Gleitmittel aufgenommen und abgeleitet wird, wobei das Lager 39 ein zweites Spurlager 45 aufweist. Um Verfahren anzugeben, bei welchem die Axialschwingungen des Rotors 14 gedämpft oder gar vermieden werden, wird vorgeschlagen, dass während dem Auftreten der Schubkraft zumindest zeitweise gleichzeitig das zweite Spurlager 45 eine in Schubrichtung wirkende Kraft auf das erste Spurlager 43 erzeugt wird. Hierdurch wird der Rotor 14 - in Axialrichtung gesehen -verspannt, wobei er währenddessen selbstverständlich weiterhin drehbar gelagert ist.

## Patentansprüche

1. Verfahren zum Betrieb einer Rotationsmaschine mit einem in einem Lager (39) gelagerten Rotor (14),
welcher Rotor (14) zu einem Betriebszeitpunkt einer hauptsächlich in nur einer Axialrichtung wirkenden Schubkraft ausgesetzt ist und welche Schubkraft von einem ersten Spurlager (43) des Lagers (39) über Gleitmittel aufgenommen und abgeleitet wird,
wobei das Lager (39) ein zweites Spurlager (45) aufweist, **gekennzeichnet durch** den Schritt,
dass während dem Auftreten der Schubkraft
zumindest zeitweise gleichzeitig das zweite Spurlager (45) eine in Schubrichtung wirkende Kraft auf das erste Spurlager (43) erzeugt.

2. Verfahren nach Anspruch 1,
bei dem die in Hauptschubrichtung wirkende Kraft zur Reduzierung des Axialspiels und/oder zur Dämpfung von Axialschwingungen des Rotors (14) dient.

3. Verfahren nach Anspruch 1 oder 2,
welches während instationären Betriebszuständen und/oder während eines Teillastbetriebs einer als Turbomaschine ausgestalteten Rotationsmaschine durchgeführt wird.

4. Verfahren nach Anspruch 4,
welches bei einer als stationäre Gasturbine (10) ausgestalteten Turbomaschine durchgeführt wird.

5. Verfahren nach einem der vorangehenden Ansprüche,
welches vor und/oder während einer Axialverschiebung des Rotors (14) durchgeführt wird.
